**Europäisches Patentamt**

**European Patent Office**

**Office européen des brevets**

(19)

(11) Veröffentlichungsnummer : **0 370 203 B1**

## (12) EUROPÄISCHE PATENTSCHRIFT

(45) Veröffentlichungstag der Patentschrift :
**04.11.92 Patentblatt 92/45**

(51) Int. Cl.⁵ : **G01P 15/08,** G01P 13/00,
F42C 19/06

(21) Anmeldenummer : **89117836.0**

(22) Anmeldetag : **27.09.89**

(54) **Beschleunigungsaufnehmender Sensor.**

(30) Priorität : **22.11.88 DE 3839344**

(43) Veröffentlichungstag der Anmeldung :
**30.05.90 Patentblatt 90/22**

(45) Bekanntmachung des Hinweises auf die
Patenterteilung :
**04.11.92 Patentblatt 92/45**

(84) Benannte Vertragsstaaten :
**BE FR GB**

(56) Entgegenhaltungen :
**WO-A-79/00792**
**US-A- 2 952 208**
**US-A- 3 038 973**
**US-A- 4 051 397**
**PATENT ABSTRACTS OF JAPAN, Band 4, Nr.**
**180 (P-40)[662], 12. Dezember 1980; & JP-A-55**
**122 147 (SHIMUZU)**

(56) Entgegenhaltungen :
**PATENT ABSTRACTS OF JAPAN, Band 12, Nr.**
**303 (P-746), 18. August 1988; & JP-A-63 075 568**
**(COPAL)**
**PATENT ABSTRACTS OF JAPAN, Band 5, Nr.**
**56 (P-057), 17. April 1981; & JP-A-56 008 558**
**(MITSUBISHI)**
**MACHINE DESIGN, Band 51, Nr. 24, Oktober**
**1979, Seite 42;** "**Inertia switch regulates**
**rocket fuse**"

(73) Patentinhaber : **DORNIER GMBH**
**Postfach 1420**
**W-7990 Friedrichshafen 1 (DE)**

(72) Erfinder : **Neu, Andreas**
**Meersburger-Strasse 28**
**W-7758 Daisendorf (DE)**

(74) Vertreter : **Landsmann, Ralf, Dipl.-Ing.**
**DORNIER GMBH - Patentabteilung - Kleeweg**
**3**
**W-7990 Friedrichshafen 1 (DE)**

EP 0 370 203 B1

## Beschreibung

Die Erfindung betrifft einen beschleunigungsdetektierenden Sensor, der insbesondere zur Erkennung von Beschleunigungen im sehr hohen g-Bereich einsetzbar ist, beispielsweise für Penetrometer-Messungen, bestehend aus einem Piezofolienelement zur direkten Ansteuerung eines digitalen IC als beschleunigungsabhängiger Schalter.

Beschleunigungssensoren werden beispielsweise für Submunitionen verwendet, welche Erdreich und Betonwände eines Shelters mit hoher Geschwindigkeit durchdringen und erst dann explodieren, wenn sie sich im Innern des Shelters befinden. Hierbei ist wichtig, das Ende der Penetrationsphase zu detektieren, um zum richtigen Zeitpunkt den Sprengsatz zu zünden. Während die Submunition durch Erde und Beton dringt, tritt eine hohe Verzögerung auf, die beim Durchbruch der letzten Betonwand wieder verschwindet. Insbesondere Anfang und Ende dieses Beschleunigungsverlaufs zu erkennen sind eine wesentliche Aufgabe des Sensors. Bei der Penetration der Submunition durch den Shelter treten Verzögerungen von 1000 g (Erde) bis 100.000 g (Beton) auf. Ebenso treten beim Ausstoß der Submunition aus dem Dispenser relativ hohe Querbeschleunigungen auf, die sich dann noch erhöhen, wenn die Submunition bei Beginn der Penetrationsphase schräg zu ihrer Längsachse auftrifft.

Es sind Beschleunigungsaufnehmer bekannt, die sehr teuer sind und prinzipiell analog arbeiten. Dies macht einen Analog-Digital-Wandler und weitere Auswertungshard- und Software zur Signalverarbeitung notwendig, was eine weitere Verteuerung bedeutet. Bei diesen Sensoren ergab sich bei Messungen, daß die Meßwerte stark verrauscht waren. Als Ursache dafür ist denkbar, daß die Geschoßhülle durch die sehr großen plötzlich auftretenden Kräfte selbst zu schwingen beginnt, diese Schwingung sich der eigentlichen Verzögerung überlagert und so die Messung verfälscht, oder daß das Rauschen durch Eigenschwingungen des Masse-Feder-Systems des Sensors verursacht wird.

Weiterhin ist aus der JP-A-55 122 147 ein Beschleunigungssensor bekannt, bei dem das Ausgangssignal eins piezoelektrische Elements über einen Schmitt- Trigger in ein Signal mit vorgeschriebenem Schwellenwert umgewandelt wird.

Aufgabe der Erfindung ist es, einen beschleunigungsanzeigenden Sensor anzugeben, der ein digitales Ausgangssignal bestimmter Mindestgröße ohne elektrische Vorverstärkung erzeugt und der auch bei sehr hohen Beschleunigungen verwendbar ist.

Diese Aufgabe wird durch die Erfindung nach Anspruch 1 gelöst. Ausgestaltungen sind Bestandteile von abhängigen Ansprüchen.

Über einen definierten vorgeformten Bogen in Kreisbogenform in einem Trägerteil aus Metall, wird eine piezoelektrische Folie beispielsweise aus 40 μm dickem Polyvenyldenfluorid (PVDF) aufgespannt. Der Bogen verhindert eine übermäßige Dehnung der Folie. Bei genügend großen Beschleunigungen legt sich die Folie an diesen Bogen an. Das dadurch entstehende piezoelektrische Signal ist groß genug, um den digitalen IC bei Überschreitung eines Schwellwertes zu schalten. Diese Schwelle kann durch Variation der Foliendicke, der Spannweite, der Elektronik oder einer zusätzlichen seismischen Belastung an die Anforderung angepaßt werden.

Beim Durchbiegen der Folie entsteht eine Spannung, die abhängig ist von der relativen Dehnung der Folie, der Dicke der Folie und der piezoelektrischen Spannungskonstante. Durch Erreichen einer Spannung von 5 Volt, läßt sich ein CMOS-IC mit Schmitt-Trigger-Eingang schalten.

Der Sensor arbeitet in einem Temperaturbereich von -50 C° bis +90 C°. Unterhalb dieses Bereichs setzt die Versprödung der Folie ein und oberhalb verliert sie irreversibel ihre piezoelektrischen Eigenschaften.

Während der Penetrationszeit erwärmt sich die Submunition. Da diese Phase jedoch relativ kurz ist, nur ca. 30 ms, und gleichzeitig der Sensor gut wärmeisoliert ist, hat er während dieser Zeit konstante Temperatur. Die Sensorfolie verfügt über eine hochwertige elektrische Kontaktierung, die im ganzen Temperatur- und Beschleunigungsbereich erhalten bleibt.

Wird die Folie mit einer seismischen Masse vom zehnfachen Foliengewicht belastet, so läßt sich daraus ein direkt digitaler Beschleunigungssensor mit einer Spannweite von 20 mm konstruieren, der bei einer Beschleunigung von 650 m/(s · s) oder 66 g umschaltet. Bei unbelasteter Folie verkürzt sich die Umschaltzeit, jedoch erhöht sich gleichzeitig die Beschleunigungsschwelle auf 6500 m/(s · s). Eine Umschaltzeit von 1 Millisekunden bedeutet bei einer Penetrationsgeschwindigkeit von 200 m/s, daß der Penetrator während dieser Zeit einen Weg von 20 cm zurücklegt.

Digitale Bauelemente sind für gewisse maximale Übergangszeiten von einem Zustand zum anderen spezifiziert, deren obere Grenze bei 15 μs liegt. Wird diese Zeit überschritten, so droht die Zerstörung des IC. Einzige Ausnahme bilden Bausteine mit einem Schmitt-Trigger-Eingang. Hier darf diese Übergangszeit beliebig lang sein. Diese Bausteine bieten ferner eine Hysterese von etwa einem Volt an. Damit wird eine gewisse Rauschminderung erreicht. Ebenso sind digitale IC gegenüber Spannungen am Eingang, die außerhalb des Bereichs der Versorgungsspannung liegen, empfindlich. Deshalb werden solche Über- oder Unterspannungen durch Dioden kurzgeschlossen. Diese Dioden sind oft bereits auf dem IC integriert, jedoch können sie ohne Schaden nur kleine Ströme führen. CMOS-IC weisen nur einen kleinen Leckstrom auf, tolerieren große Übergangszeiten zwischen zwei Zuständen und tolerieren hochohmige Überspannungen am Eingang.

Die Erfindung wird anhand einer Figur näher erläutert:

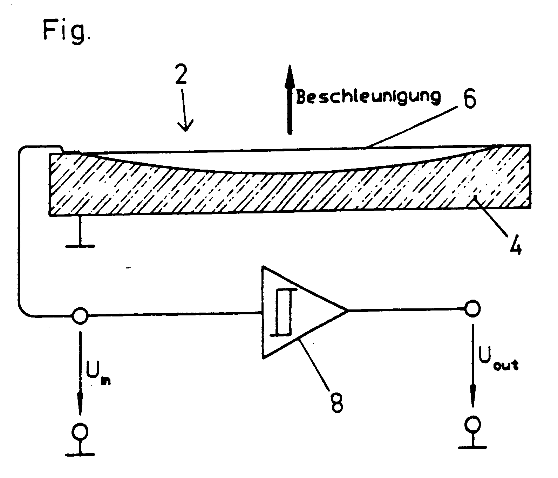

Es zeigt:
die Figur die Prinzipdarstellung von Sensor und Schaltung.

Die Figur zeigt ein Piezoelement 2, bestehend aus einem an Masse liegenden Metallkörper 4 mit einer kreisbogenförmigen Vertiefung. Über diese Vertiefung ist eine piezoelektrische Folie 6 gespannt, die durch die Beschleunigung in die Vertiefung gedrückt wird. Die durch die Biegung der Piezofolie 6 entstehende Spannung $U_{in}$ wird an ein CMOS-IC 8 mit Schmitt-Trigger-Eingang gelegt. Beim Überschreiten eines Schwellwertes von beispielsweise 5 Volt wird das digitale IC geschaltet. Diese Schwelle kann durch Variation der Foliendicke, der Spannweite der Folie, der verwendeten Elektronik oder durch ein zusätzliches seismisches Belastungsgewicht, beispielsweise aus Gummi, das an der Folie 6 befestigt werden kann, an die Anforderungen angepaßt werden.

Das erfindungsgemäße, direkt digitale Beschleunigungssensor element erzeugt ein digitales Signal, das ohne weitere Verarbeitung an einen digitalen IC gelegt werden kann. Es sind weder Vorverstärker noch Schutzdioden notwendig. Da keine Ströme geschaltet werden, kann auch kein Lichtbogen entstehen, dadurch ist auch ein Einsatz in explosionsgefährdeten Bereichen möglich. Die kleinen Abmessungen des Sensors machen kleine Umschaltzeiten möglich.

Statt einer kreisbogenförmigen Ausgestaltung ist auch eine trapezförmige Vertiefung möglich. Dabei kann die Länge eines montierten Zusatzgewichts der Länge der unteren Seite der Vertiefung entsprechen. Die Form der Vertiefung in Draufsicht ist kreisförmig oder rechteckig möglich, beispielsweise in Form einer Kugelschale oder einer zylindrischen Vertiefung.

## Patentansprüche

1. Beschleunigungsaufnehmender Sensor mit einem piezoelektrischen Element und einem mit dem piezoelektrischen Element verbundenen Schmitt-Trigger, dadurch gekennzeichnet, daß das piezoelektrische Element eine piezoelektrische Folie (6) ist, die über eine in einem Trägerteil (4) vorgesehene Vertiefung, deren Querschnitt die Form eines Kreissegments aufweist, gespannt ist und die Folie (6) an ein CMOS-IC (8) mit Schmitt-Trigger-Eingang angeschlosssen ist.

2. Beschleunigungsaufnehmender Sensor nach Anspruch 1, dadurch gekennzeichnet, daß das Trägerteil (4) ein Metallteil ist.

3. Beschleunigungsaufnehmender Sensor nach Anspruch 1, dadurch gekennzeichnet, daß an der Folie (6) ein zusätzliches seismisches Gewicht befestigt ist.

4. Beschleunigungsaufnehmender Sensor nach Anspruch 3, dadurch gekennzeichnet, daß das zusätzliche Gewicht aus Gummi ist.

5. Beschleunigungsaufnehmender Sensor nach wenigstens einem der vorhergehenden Ansprüche, dadurch gekennzeichnet, daß der CMOS-IC (8) zum Schalten nach Überschreitung eines Schwellwertes der Foliendurchbiegung vorgesehen ist.

## Claims

1. Acceleration pick-up sensor with a piezoelectric element and a Schmitt trigger associated with the piezoelectric element, characterised in that the piezoelectric element is a piezoelectric foil (6), which is stretched across a recess provided in a carrier part (4), the cross-section of the recess being in the form of a segment of a circle; and in that the foil is connected to a CMOS-IC (8) with a Schmitt trigger input.

2. Acceleration pick-up sensor according to claim 1, characterised in that the carrier part (4) is a metal part.

3. Acceleration pick-up sensor according to claim 1, characterised in that an additional seismic weight is attached to the foil (6).

4. Acceleration pick-up sensor according to claim 3, characterised in that the additional weight is made of rubber.

5. Acceleration pick-up sensor according to at least one of the preceding claims, characterised in that the CMOS-IC (8) is provided for switching after a threshold value of the foil deflection has been exceeded.

## Revendications

1. Capteur de mesure d'accélération, avec un élément piézoélectrique et une bascule de Schmitt reliée à l'élément piézoélectrique, **caractérisé** en ce que l'élément piézoélectrique est une feuille piézoélectrique (6), tendue au-dessus d'un renfoncement qui est prévu dans un support (4) et dont la section a la forme d'un segment de cercle, et la feuille (6) est raccordée à un circuit intégré CMOS (8) présentant une entrée de bascule de Schmitt.

2. Capteur de mesure d'accélération selon la revendication 1, **caractérisé** en ce que le support (4) est une pièce métallique.

3. Capteur de mesure d'accélération selon la revendication 1, **caractérisé** en ce qu'un poids sismique supplémentaire est fixé sur la feuille (6).

4. Capteur de mesure d'accélération selon la revendication 3, **caractérisé** en ce que le poids supplémentaire est en caoutchouc.

5. Capteur de mesure d'accélération selon au moins une des revendications précédentes, **caractérisé** en ce que le circuit intégré CMOS (8) est prévu pour être commuté à la suite du dépassement d'une valeur de seuil de la flexion de la feuille.

Fig.